# EUROPÄISCHE PATENTSCHRIFT

(11) **EP 2 381 208 B1**
(45) Veröffentlichungstag und Bekanntmachung des Hinweises auf die Patenterteilung: **11.09.2019**
(21) Anmeldenummer: 11002853.7
(22) Anmeldetag: 06.04.2011
(51) Int. Cl.: F41G 3/02, F41G 7/00, F41G 7/22, G01S 3/786, G06K 9/32

(54) **Verfahren zur Bestimmung von Positionsdaten eines Zielobjekts in einem Referenzsystem**
Method for determining positional data of a target object in a reference system
Procédé de détermination de données de position d'un objet cible dans un système de référence

(30) Priorität: 24.04.2010 DE 102010018143
(43) Veröffentlichungstag der Anmeldung: 26.10.2011
(73) Patentinhaber: MBDA Deutschland GmbH, 86529 Schrobenhausen (DE)
(72) Erfinder: Holicki, Michael, 80804 München (DE); Zoz, Jürgen, 86316 Friedberg (DE); Schweyer, Nikolaus, 81739 München (DE); Speth, Johannes, 80797 München (DE)
(74) Vertreter: Isarpatent

(56) Entgegenhaltungen:
- EP-A1- 1 983 292
- CH-A5- 675 638
- US-A- 5 881 969
- US-A1- 2006 120 590
- US-A1- 2006 210 169
- CHRISTY S ET AL: "Terminal air-to-ground missile guidance by infrared seeker", PROCEEDINGS OF SPIE, Nr. 3086, 23. April 1997 (1997-04-23), Seiten 233-243, XP002076459, ISSN: 0277-786X
- WILDES R P ET AL: "Video georegistration: algorithm and quantitative evaluation", PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, vol. 2, 7 July 2001 (2001-07-07), pages 343-350, XP010554109, ISBN: 978-0-7695-1143-6

## Beschreibung

Die vorliegende Erfindung betrifft ein Verfahren zur Bestimmung von Positionsdaten eines Zielobjekts in einem Referenzsystem aus einer von diesem beabstandeten Beobachtungsposition. Die Erfindung betrifft weiterhin ein Verfahren zur Führung eines fliegenden Waffensystems zu einem Zielobjekt und zur Ausrichtung einer Waffe auf das Zielobjekt.

In der Nähe eines Zielgebiets können sich mehrere unterschiedliche Einsatzkräfte an unterschiedlichen Orten befinden. Das Zusammenführen von Informationen, die diese verteilten Einsatzkräfte über das Zielgebiet gewinnen, ist für die Lagebeurteilung erforderlich und bildet die Voraussetzung zu einem koordinierten Vorgehen dieser Einsatzkräfte. Präzise und eindeutige Zieldaten spielen dabei eine wesentliche Rolle.

Häufig kommt es vor, dass sich Bodenkräfte bereits nahe an ein Ziel herangearbeitet haben und Unterstützung aus der Luft anfordern. Die Abstimmung eines Einsatzes derart verteilt lokalisierter Kräfte erfordert präzise Angaben über den Zielort. Die dafür benötigten Positionsdaten des Zielobjekts können sich jene Einsatzkräfte, die sich bereits in der Nähe des Ziels befinden, am genauesten beschaffen. Allerdings sind die derart gewonnenen Positionsdaten des Zielobjekts zunächst nur relative Positionsdaten zwischen der Position des Ziels und der Position des Beobachters.

Eine bekannte Möglichkeit, eine dislozierte Waffe, zum Beispiel einen Flugkörper, auf ein Ziel einzuweisen, besteht darin, dass der Beobachter mit geeignetem Gerät das Ziel beleuchtet und der anfliegende Flugkörper den codierten Leuchtpunkt sucht und anfliegt. Ein wesentlicher Nachteil bei diesem Verfahren besteht darin, dass der Beobachter sich durch die aktive Beleuchtung, die zwangsläufig über eine gewisse Zeit aufrecht erhalten werden muss, verraten kann. Außerdem gestaltet sich dieses Verfahren in stärker bebautem Gelände wegen vieler Verdeckungen und dadurch entstehenden Gebäudeschatten sehr schwierig.

Eine weitere bekannte Möglichkeit der Zieleinweisung für einen Flugkörper besteht darin, mit Geräten zur Bestimmung geografischer Positionsdaten, zum Beispiel Satellitennavigationsgeräten, Kompass und Karte, die geographischen Positionsdaten des Zielobjekts zu ermitteln und den Flugkörper auf die so ermittelten Zielkoordinaten zu lenken. Eine derartige Bestimmung der geografischen Positionsdaten genügt jedoch nicht immer den Anforderungen an die für einen präzisen Angriff erforderliche Genauigkeit. Insbesondere, wenn sich zivile Gebäude und Einrichtungen in der Nähe des Zielobjekts befinden, reicht die Genauigkeit der auf diese Weise bestimmten geografischen Positionsdaten des Zielobjekts nicht aus, um das Entstehen von Kollateralschäden zu vermeiden. Insbesondere in städtischem Gebiet oder anderem dicht bebautem Gebiet, können geringste Fehler bei der Bestimmung der Positionsdaten des Zielobjekts verheerende Folgen haben. Die für dieses Einsatzszenario erforderliche eindeutige und exakte Bestimmung der Positionsdaten des Zielobjekts, beispielsweise die eines Gebäudes, aus dem heraus der Gegner die eigenen Kräfte unter Beschuss nimmt, erfordert höchste Präzision, die mit den derzeit bekannten Mitteln aus sicherer Distanz nicht erreichbar ist.

"Terminal air-to-ground missile guidance by infrared seeker" von Christy S et al, veröffentlich in Proceedings of Spie, Nr. 3086 am 23. April 1997, beschreibt ein Verfahren zur Steuerung einer Luft-Boden-Rakete mittels eines Infrarot-Sensors.

Aufgabe der vorliegenden Erfindung ist es daher, ein Verfahren zur Bestimmung der Positionsdaten eines Zielobjekts aus einer von diesem beabstandeten

Beobachtungsposition anzugeben, mit dem es möglich ist, die Positionsdaten des Zielobjekts präzise zu bestimmen und das Ziel eindeutig zu definieren, so dass es auch von einem von der Beobachtungsposition verschiedenen Ort, beispielsweise von einem anfliegenden Flugkörper aus, schnell und eindeutig identifizierbar ist.

Diese Aufgabe wird gelöst durch das Verfahren mit den Merkmalen des Patentanspruchs 1.

Erfindungsgemäß werden dabei die folgenden Schritte ausgeführt:
a) Bereitstellen eines dreidimensionalen Referenzmodells der Umgebung des Zielobjekts mit bekannten geographischen Ortsdaten;
b) Abgleichen eines sich von der Beobachtungsposition für einen Beobachter ergebenden Bildes des Zielobjekts und von dessen Umgebung wobei das Bild von einer Bilderfassungseinrichtung eines Aufklärungsgerätes geliefert wird, mit dem Referenzmodell;
c) Bestimmen der Positionsdaten des anvisierten Zielobjekts im Referenzmodell als relative Positionsdaten zu bekannten Ortsdaten des Referenzmodells durch eine Rechnereinrichtung des Aufklärungsgeräts; und
d) Übermitteln der relativen Positionsdaten an einen Flugkörper zur Einweisung desselben.

Gemäß dem Verfahren der Erfindung wird somit ein gemeinsames dreidimensionales Referenzmodell der Umgebung des Zielobjekts dem Beobachter bereitgestellt. Dieses dreidimensionale Referenzmodell steht auch der anfliegenden Waffe zur Verfügung. Durch die vorgenannten Schritte des erfindungsgemäßen Verfahrens ist es dem Beobachter möglich, das Zielobjekt im dreidimensionalen Referenzmodell zu identifizieren und dessen Lage in diesem Referenzmodell zu definieren. Aufgrund der so definierten relativen Positionsdaten des Zielobjekts im dreidimensionalen Referenzmodell kann das Zielobjekt aus jeder anderen Richtung eindeutig identifiziert werden und die aus einer beliebigen Richtung anfliegende Waffe kann das Zielobjekt eindeutig finden und präzise treffen. Die absolute Positionsgenauigkeit des dreidimensionalen Referenzmodells spielt dabei nur eine untergeordneten Rolle, sie muss lediglich so gut sein, dass die Zuordnung zwischen dem dreidimensionalen Referenzmodell und der von einer Bilderfassungseinrichtung des Beobachters oder der anfliegenden Waffe modellierten Szene möglich ist. Die Nutzung von relativen Positionsdaten des Zielobjekts in einem das Referenzmodell aufweisenden Referenzsystem ermöglicht eine sichere Zieldefinition und Zielansprache allein auf der Basis des jeweils erfassten Bildes und des Referenzmodells ohne dass es erforderlich ist, die absoluten geografischen Positionsdaten des Zielobjekts, des Beobachters, und bei einer Zielbekämpfung auch der Waffe, exakt zu bestimmen.

Eine vorteilhafte Weiterbildung des erfindungsgemäßen Verfahrens zeichnet sich dadurch aus, dass das in Schritt a) bereitgestellte Referenzmodell aus Luftaufnahmen und/oder Satellitenaufnahmen des Zielobjekts und seiner Umgebung gewonnen wird. Die Referenzmodelle können auf unterschiedliche Weise erzeugt werden. Eine bevorzugte Möglichkeit ist die fotogrammetische Vermessung hochpräziser Luftaufnahmen, eine andere Möglichkeit besteht darin, aus beispielsweise von Aufklärungsluftfahrzeugen aufgenommenen Bildfolgen eine dreidimensionale Rekonstruktion des Referenzmodells vorzunehmen.

Alternativ oder zusätzlich können zur Gewinnung des in Schritt a) bereitgestellten Referenzmodells auch Radar- oder Lidarmessungen des Zielobjekts und/oder seiner Umgebung herangezogen werden.

Erfindungsgemäß erfolgt der Abgleich des Bildes des Zielobjekts und von dessen Umgebung mit dem Referenzmodell in Schritt b) in den folgenden Teilschritten:
b1) Bilden eines dreidimensionalen Linienmodells aus dem dreidimensionalen Referenzmodell;
b2) Projizieren des Linienmodells aufgrund einer groben Positions- und Lagehypothese in das von einer Bilderfassungseinrichtung aufgenommene Bild des Zielobjekts und von dessen Umgebung;
b3) Abgleichen der Linien des dreidimensionalen Linienmodells mit aus dem Bild extrahierten Liniensegmenten; und
b4) Berechnen einer Korrektur der Positions- und Lagehypothese aus dem Abgleich,
wobei die in Schritt b4) ermittelte Korrektur bei der Bestimmung der Positionsdaten des Zielobjekts in Schritt c) berücksichtigt wird. Bei diesem Algorithmus wird das von der Beobachtungsposition beispielsweise mit einer Kamera aufgenommen Bild des Zielobjekts und seiner Umgebung mit dem dreidimensionalen Referenzmodell der aufgenommenen Szene abgeglichen. Aus diesem Abgleich werden Korrekturfaktoren für die Positions- und Lagehypothese berechnet und die Position und die Lage der Kamera, also der Beobachtungsposition, können genau bestimmt werden.

Gemäß des erfindungsgemäßen Verfahrens wird zunächst ein dreidimensionales Linienmodell gebildet, um ein linienhaftes dreidimensionales Referenzmodell zu gewinnen. Diese Linien bilden sowohl für den Beobachter, als auch für den Suchkopf eines anfliegenden Flugkörpers die Grundlage für die Ortung und Lokalisierung der eigenen Beobachtungsposition. Dabei können neben dem dreidimensionalen Referenzmodell und dem aufgenommenen Kamerabild von der Beobachtungsposition bzw. der Kamerabildfolge weitere Umgebungsdaten für eine grobe initiale Positions- und Lagehypothese einfließen. Diese Umgebungsdaten und Zusatzdaten können z.B. per Kompass und Satelliten-Navigationssystem oder im Falle eines Flugkörpers über ein integriertes Satelliten-Navigationssystem und/oder Inertial-Navigationssystem ermittelt werden.

Weiterhin ist es von Vorteil, wenn beim erfindungsgemäßen Verfahren zur Bestimmung der Positionsdaten des Zielobjekts aus den Ortsdaten des Referenzmodells in Schritt c) folgende Teilschritte durchgeführt werden:
c1) Bestimmen der geografischen Positionsdaten der Beobachtungsposition;
c2) Bestimmen der Positionsdaten des Zielobjekts relativ zu den Positionsdaten der Beobachtungsposition;
c3) Ermittlung der relativen Positionsdaten des Zielobjekts in Bezug auf das Referenzmodell.

Durch die mit diesen Schritten ausgeführte Ermittlung der relativen Positionsdaten des Zielobjekts in Bezug auf das Referenzmodell ist es auf einfache Weise möglich, mittels der beispielsweise über ein Satelliten-Navigationsgerät bestimmten Positionsdaten an der Beobachtungsposition und dem Referenzmodell sowie der im Schritt b) bestimmten Korrekturdaten eine genaue relative Position des Zielobjekts im Referenzmodell zu definieren.

Vorteilhaft ist dabei, wenn die Bestimmung der Positionsdaten des Zielobjekts relativ zu den Positionsdaten der Beobachtungsposition im Schritt c2) dadurch erfolgt, dass von der Beobachtungsposition aus eine auf das Zielobjekt gerichtete Entfernungsmessung, vorzugsweise eine Laser-Entfernungsmessung, durchgeführt wird, wobei die bei der Entfernungsmessung ermittelte Richtung und Entfernung zwischen Beobachtungsposition und Zielobjekt zur Bestimmung der Positionsdaten des Zielobjekts herangezogen werden.

Alternativ kann die Bestimmung der Positionsdaten des Zielobjekts aus den Ortsdaten des Referenzmodells in Schritt c) auch dadurch erfolgen, dass von der an der Beobachtungsposition befindlichen Bilderfassungseinrichtung ein virtueller Sichtstrahl definiert wird, der beispielsweise der optischen Achse der Bilderfassungseinrichtung entspricht, und dass die Koordinaten des von diesem Sichtstrahl auf dem Zielobjekt abgebildeten Zielpunkts im Referenzmodell als Positionsdaten des Zielobjekts bestimmt werden.

Die Erfindung betrifft außerdem ein Verfahren zur Führung des Flugkörpers, wobei zunächst die Positionsdaten des Zielobjekts in einem Referenzsystem als relative Positionsdaten in einem Referenzmodell gemäß der vorliegenden Erfindung bestimmt werden
und wobei dann zur Führung des Flugkörpers folgende Schritte durchgeführt werden:
aa) Erfassen eines Bildes des Zielobjekts und von dessen Umgebung mit einer an Bord des Flugkörpers vorgesehenen Bilderfassungseinrichtung;
bb) Abgleichen des in Schritt aa) gewonnenen Bildes mit dem dreidimensionalen Referenzmodell und
cc) Bestimmen der Positionsdaten der Bilderfassungseinrichtung und damit des Flugkörpers relativ zu den Positionsdaten des Zielobjekts und
dd) Steuern des Flugkörpers in das Zielobjekt unter Verwendung der in Schritt cc) ermittelten Relativlage des Flugkörpers zum Zielobjekt.

Dieses Flugführungsverfahren nutzt ebenfalls die Information über die Relativposition des Zielobjekts im Referenzmodell. Der anfliegende Flugkörper sieht mit seiner Bilderfassungseinrichtung das Zielobjekt und dessen Umgebung aus einem anderen Blickwinkel als der Beobachter an der Beobachtungsposition. Auch bei diesem Flugführungsverfahren wird das von der Bilderfassungseinrichtung gewonnene Bild zunächst mit dem dreidimensionalen Referenzmodell abgeglichen. Da die Koordinaten des Zielobjekts im Referenzmodell, also im Referenzsystem, bereits vom Beobachter ermittelt worden sind, lässt sich die Relativposition des Flugkörpers zum Zielobjekt schnell und einfach bestimmen und somit der Flugkörper zuverlässig und treffsicher in das Zielobjekt steuern.

Vorzugsweise ist dabei das fliegende Waffensystem ein unbemannter Flugkörper, der mittels des Verfahrens in das Zielobjekt gesteuert wird.

Nicht erfindunsgemäß kann das fliegende Waffensystem ein mit zumindest einer Waffe versehenes Luftfahrzeug, beispielsweise ein Kampfhubschrauber, sein, dessen Waffe mittels des Verfahrens auf das Zielobjekt ausgerichtet wird.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Es zeigt:

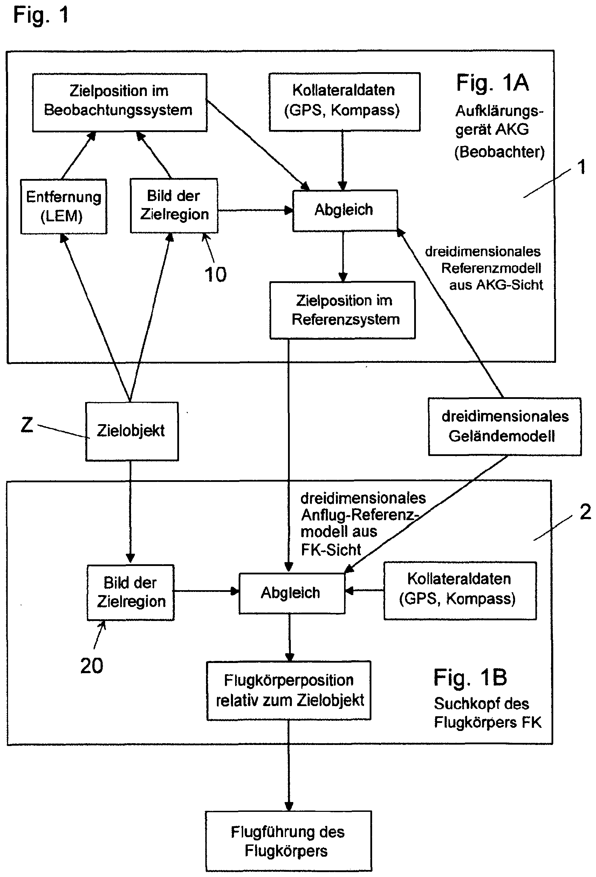

- Fig. 1: eine schematische Darstellung des Ablaufs der einzelnen Verfahrensschritte sowohl des Verfahrens zur Bestimmung des Positionsdaten eines Zielobjekts aus einer von diesem beabstandeten Beobachtungsposition, als auch des Verfahrens zur Führung eines unbemannten Flugkörpers in das Zielobjekt.

Fig. 1 zeigt schematisch im Teil 1A die Schritte des Verfahrens zur Bestimmung der Positionsdaten eines Zielobjekts Z aus einer von diesem beabstandeten Beobachtungsposition durch ein Aufklärungsgerät 1 eines Beobachters. Im Teil 1B der Fig. 1 werden schematisch die Verfahrensschritte des Verfahrens zur Führung eines unbemannten Flugkörpers in das Zielobjekt Z gezeigt. Zunächst wird das Verfahren zur Bestimmung der Positionsdaten des Zielobjekts aus einer von diesem beabstandeten Beobachtungsposition anhand der Teilfigur 1A beschrieben.

Ein Beobachter, der sich an einer Beobachtungsposition befindet, die vom Zielobjekt Z beabstandet ist, von der aus der Beobachter aber eine ungehinderte Sichtverbindung zum Zielobjekt Z besitzt, ist mit einem Aufklärungsgerät 1 ausgestattet, welches eine Bilderfassungseinrichtung 10, beispielsweise eine elektronische Kamera, aufweist. Der Beobachter visiert mit der Bilderfassungseinrichtung 10 das Zielobjekt Z und dessen Umgebung an. Die Bilderfassungseinrichtung 10 liefert daraufhin ein Bild, das beispielsweise auf einem Monitor angezeigt wird und in dem die Position des Zielobjekts Z als Zielposition im Beobachtungssystem definiert ist. Dieses Bild wird dann mit einem Referenzmodell abgeglichen. Dabei werden in das Bild Daten eines von der Umgebung des Zielobjekts zu einem früheren Zeitpunkt gewonnenen dreidimensionalen

Geländemodells der Umgebung des Zielobjekts in Form des die Beobachtungsrichtung berücksichtigenden Referenzmodells zugespielt und das von der Bilderfassungseinrichtung aufgenommene Bild wird mit charakteristischen Linien eines aus dem Referenzmodell gebildeten Linienmodells überlagert. Dazu werden zunächst die geographischen Positionsdaten der Beobachtungsposition, also des Standpunktes der Bilderfassungseinrichtung, sowie die Richtung und Entfernung von der Beobachtungsposition zum Zielobjekt Z als sogenannte Kollateraldaten bestimmt. Diese Positionsdaten der Beobachtungsposition werden dann in einer Rechnereinrichtung des Aufklärungsgeräts dazu verwendet, um das dreidimensionale Referenzmodell R so auszurichten, dass es in seiner perspektivischen Darstellung auf dem Monitor der Darstellung des tatsächlichen Bildes, das von der Bilderfassungseinrichtung aufgenommen wurde, also des Bildes der Zielregion, grob entspricht.

Die Rechnereinrichtung des Aufklärungsgeräts führt nun anhand von charakteristischen Linien, die aus dem von der Bilderfassungseinrichtung aufgenommenen Bild gewonnen werden, einen Mustervergleich mit den Linien des Linienmodells aus dem Referenzmodell durch. Als Ergebnis dieses Mustervergleichs werden Abweichungen in Lage und Position von jeweils einander zugeordneten Linienpaaren aus den Linien des Referenzmodells und aus den aus dem erfassten Bild extrahierten Linien durch Relativverschiebung der beiden Linienmodelle zueinander kompensiert, wodurch schließlich die Positionsdaten des anvisierten Zielobjekts im Referenzmodell als relative Positionsdaten zu bekannten Ortsdaten des Referenzmodells bestimmt werden können. Die Lage des Zielobjekts im Referenzmodell ist damit eindeutig definiert.

Der Beobachter nutzt dazu sein Aufklärungsgerät, welches neben der Bilderfassungseinrichtung auch Zusatzsensoren enthält, die eine grobe Positions- und Lagehypothese der geographischen Positionsdaten der Bilderfassungseinrichtung und damit des Aufklärungsgeräts und der Beobachtungsposition liefern. Derartige Zusatzsensoren können beispielsweise ein Satellitennavigationsgerät oder ein Kompass sein.

Optional kann das Aufklärungsgerät auch mit einem Laserentfernungsmesser (LEM) ausgestattet sein, um die Entfernung zum Zielobjekt zu bestimmen. Damit kann der Beobachter aus dem Bild des Zielobjekts und seiner Umgebung, der Entfernungsmessung sowie seiner Positions- und Lagehypothese eine Hypothese für die absoluten Positionsdaten des Zielobjekts ermitteln. Diese Hypothese wird aber aufgrund der Ungenauigkeiten der beteiligten Sensoren nicht präzise genug sein, um allein damit einen Präzisionsflugkörper einzuweisen. Insbesondere die Messfehler eines Kompass' oder eines alternativ eingesetzten Kreisel-Northfinders, würden bei großen Abständen zum Ziel zu erheblichen Fehlern in der Zielpositionierung führen. Dies wiederum würde in der Folge dann zu Kollateralschäden beim Angriff eines Flugkörpers auf das Ziel führen. Es wird statt dessen das erfindungsgemäße Verfahren eingesetzt, bei dem die Position des Zielobjekts relativ zum Referenzmodell bestimmt wird.

Diese Bestimmung der Positionsdaten des Zielobjekts relativ zum Referenzmodell kann auf zwei unterschiedliche Weisen erfolgen. Im ersten Fall wird der bereits erwähnte Laserentfernungsmesser verwendet, um die Position des Ziels relativ zum Beobachter, also relativ zur Beobachtungsposition, zu bestimmen. Zusammen mit den bekannten geographischen Positionsdaten der Beobachtungsposition, der vom Laserentfernungsmesser gemessenen Entfernung zum Ziel und der Richtung von der Beobachtungsposition zum Zielobjekt lässt sich der Zielpunkt, der definiert ist durch die relativen Positionsdaten des Zielobjekts im Referenzmodell, bestimmen.

Im zweiten, alternativen Fall wird kein Laserentfernungsmesser benötigt. In diesem Fall definiert das von der Bilderfassungseinrichtung aufgenommene Bild des Zielobjekts einen dreidimensionalen Sichtstrahl, der beispielsweise durch die optische Achse der Bilderfassungseinrichtung definiert ist, sofern sich das Zielobjekt in der Bildmitte befindet. Dort wo dieser Sichtstrahl eine dem Zielobjekt zugeordnete Fläche oder Linie des Referenzmodells schneidet, liegt wiederum der Zielpunkt im Referenzmodell. Diese zweite Variante besitzt den Vorteil, dass sie ohne Laserentfernungsmesser auskommt und daher vollständig passiv ist. Der Beobachter muss sich also nicht durch einen Laserstrahl zu erkennen geben. Diese

Variante ist aber darauf angewiesen, dass das Zielobjekt zumindest als Fläche oder Linie im Referenzmodell enthalten ist. Es können damit also nur Ziele definiert werden, die Bestandteil der im Referenzmodell modellierten Struktur sind, wie zum Beispiel ein Fenster oder eine Tür eines im Referenzmodell modellierten Hauses. Zielobjekte, die nicht Bestandteil des Referenzmodells sind, beispielsweise ein vor einem Haus stehendes Fahrzeug, lassen sich mit dieser Variante nicht eindeutig im Referenzmodell positionieren. Für derartige Zielobjekte ist eine Entfernungsmessung, beispielsweise mit einem Laserentfernungsmesser, und die Vorgehensweise nach der ersten Variante erforderlich.

Grundsätzlich ist es natürlich auch denkbar, dass beide vorgenanten Varianten dem Beobachter im Aufklärungsgerät zur Verfügung stehen und wahlweise eingesetzt werden können. Jede der beiden Varianten liefert als Ergebnis einen in seinen drei Raumkoordinaten relativ zum Koordinatensystem des Referenzmodells definierten Zielpunkt im dreidimensionalen Referenzmodell. Diese relativen Zielpunktkoordinaten können vom Beobachter entweder zur allgemeinen Lagebeurteilung in ein Kontrollzentrum übertragen werden oder sie können direkt zur Einweisung eines Flugkörpers vom Beobachter an diesen übermittelt werden.

Nachstehend wird unter Bezugnahme auf die Teilfigur 1B beschrieben wie diese relativen Zielpunktdaten zur Steuerung des mit einem Suchkopf 2 versehenen Flugkörpers in das Zielobjekt verwendet werden.

Nachdem der Zielpunkt als Koordinatenpunkt des Zielobjekts im dreidimensionalen Referenzmodell des Beobachters und damit im dreidimensionalen Geländemodell der Umgebung des Zielobjekts in der vorstehend beschriebenen Weise vom Beobachter festgelegt und definiert worden ist, wird die vom Flugkörper zu fliegende Mission geplant. Dabei wird die geplante Anflugrichtung des Flugkörpers auf das Zielobjekt anhand der Zielposition und des vorhandenen dreidimensionalen Geländemodells der Zielumgebung in einer für die Missionsdurchführung geeigneten Weise festgelegt. In Abhängigkeit vom Zielpunkt und von der festgelegten Anflugrichtung wird aus dem dreidimensionalen Geländemodell ein Anflug-Referenzmodell berechnet und generiert.

In der Flugphase der Annäherung des Flugkörpers an das Zielobjekt und die Zielumgebung stützt sich der im Flugkörper vorgesehene Suchkopf 2 zur Orientierung zunächst auf die Kollateraldaten aus einem im Flugkörper vorhandenen Satellitennavigationssystem und Inertial-Navigationssystem, um eine grobe Positionsbestimmung des Flugkörpers relativ zum Ziel vorzunehmen. Diese Information über die ungefähre Position des Flugkörpers wird dann dazu verwendet, das dreidimensionale Anflug-Referenzmodell in ein aktuell von einer Bilderfassungseinrichtung 20 im Suchkopf 2 des Flugkörpers aufgenommenes Bild zu projizieren. Durch den dann folgenden Abgleich dieses Bildes mit der Projektion des dreidimensionalen Anflug-Referenzmodells wird in analoger Weise wie dies bereits oben in Bezug auf den Figurenteil 1A beschrieben worden ist, die genaue Position und Lage des Flugkörpers relativ zum Zielpunkt berechnet. Auf diese Weise werden auch für den Flugkörper die Ungenauigkeiten bei der Messung seiner Position mittels des Satellitennavigationssystems und des Inertial-Navigationssystems kompensiert, was zu einem präziseren Treffen des Zielobjekts führt.

Auch wenn in der vorstehenden Beschreibung zum einfacheren Verständnis ausgeführt worden ist, dass das entsprechende dreidimensionale Referenzmodell in ein aktuell von einer Bilderfassungseinrichtung (des Aufklärungsgeräts oder des Flugkörpers) erfasstes Bild projiziert wird und gegebenenfalls auf einem Monitor angezeigt wird, so ist es nicht zwingend erforderlich, diese Projektion und die Anzeige auf einem Monitor vorzunehmen. Es ist bereits ausreichend, wenn die entsprechenden Daten des Referenzmodells und des Bildes in einer Rechnereinrichtung zusammengeführt werden und der entsprechende Abgleich zwischen den abweichenden Relativlagen des aufgenommenen Bildes und der Szene des Referenzmodells ausschließlich in einer Rechnereinrichtung des Aufklärungsgeräts beziehungsweise des Flugkörpers erfolgt.

Auch wenn in der vorstehenden Beschreibung zum einfacheren Verständnis immer von einem Flugkörper und einem Suchkopf gesprochen wird, so kann stattdessen auch ein anderer Waffenträger, beispielsweise ein Hubschrauber oder ein Flugzeug, mit geeignetem Gerät zur Bilderfassung und zum Abgleich des Referenzmodells mit dem erfassten Bild eingesetzt werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Aufklärungsgerät
- 2: Suchkopf
- 10: Bilderfassungseinrichtung von 1
- 20: Bilderfassungseinrichtung von 2
- Z: Zielobjekt

## Patentansprüche

1. Verfahren zur Bestimmung der Positionsdaten eines Zielobjekts (Z) in einem Referenzsystem aus einer von diesem beabstandeten Beobachtungsposition mit den Schritten:
a) Bereitstellen eines dreidimensionalen Referenzmodells der Umgebung des Zielobjekts (Z) mit bekannten geografischen Ortsdaten;
b) Abgleichen eines sich von der Beobachtungsposition für einen Beobachter ergebenden Bildes des Zielobjekts (Z) und von dessen Umgebung wobei das Bild von einer Bilderfassungseinrichtung (10) eines Aufklärungsgeräts (1) geliefert wird, mit dem dreidimensionalen Referenzmodell;
c) Bestimmen der Positionsdaten des anvisierten Zielobjekts (Z) im dreidimensionalen Referenzmodell als relative Positionsdaten zu bekannten Ortsdaten des dreidimensionalen Referenzmodells durch eine Rechnereinrichtung des Aufklärungsgeräts (1); und
d) Übermitteln der relativen Positionsdaten an einen Flugkörper zur Einweisung desselben,
wobei das Abgleichen des Bildes des Zielobjekts (Z) und von dessen Umgebung mit dem Referenzmodell in Schritt b) in den folgenden Teilschritten erfolgt:
b1) Bilden eines dreidimensionalen Linienmodells aus dem dreidimensionalen Referenzmodell;
b2) Projizieren des Linienmodells aufgrund einer groben Positions- und Lagehypothese in das von einer Bilderfassungseinrichtung aufgenommene Bild des Zielobjekts (Z) und von dessen Umgebung;
b3) Abgleichen der Linien des dreidimensionalen Linienmodells mit aus dem Bild extrahierten Liniensegmenten; und
b4) Berechnen einer Korrektur der Positions- und Lagehypothese aus dem Abgleich
wobei die in Schritt b4) ermittelte Korrektur bei der Bestimmung der Positionsdaten des Zielobjekts (Z) in Schritt c) berücksichtigt wird.

2. Verfahren nach Anspruch 1,
**dadurch gekennzeichnet,**
**dass** das in Schritt a) bereitgestellte Referenzmodell aus Luftaufnahmen und/oder Satellitenaufnahmen des Zielobjekts (Z) und seiner Umgebung gewonnen wird.

3. Verfahren nach Anspruch 1 oder 2,
**dadurch gekennzeichnet,**
**dass** das in Schritt a) bereitgestellte Referenzmodell aus Radar- oder LidarMessungen des Zielobjekts (Z) und/oder seiner Umgebung gewonnen wird.

4. Verfahren nach einem der vorhergehenden Ansprüche,
**dadurch gekennzeichnet,**
**dass** zur Bestimmung der Positionsdaten des Zielobjekts (Z) aus den Ortsdaten des Referenzmodells im Schritt c) folgende Teilschritte durchgeführt werden:
c1) Bestimmen der geografischen Positionsdaten der Beobachtungsposition;
c2) Bestimmen der Positionsdaten des Zielobjekts (Z) relativ zu den Positionsdaten der Beobachtungsposition;
c3) Ermittlung der relativen Positionsdaten des Zielobjekts (Z) in Bezug auf das Referenzmodell.

5. Verfahren nach Anspruch 4,
**dadurch gekennzeichnet,**
**dass** die Bestimmung der Positionsdaten des Zielobjekts (Z) relativ zu den Positionsdaten der Beobachtungsposition im Schritt c2) dadurch erfolgt, dass von der Beobachtungsposition aus eine auf das Zielobjekt (Z) gerichtete Entfernungsmessung, vorzugsweise Laser-Entfernungsmessung, durchgeführt wird, wobei die bei der Entfernungsmessung ermittelte Richtung und Entfernung zur Bestimmung der Positionsdaten des Zielobjekts (Z) herangezogen werden.

6. Verfahren nach einem der Ansprüche 1 bis 3,
**dadurch gekennzeichnet,**
**dass** zur Bestimmung der Positionsdaten des Zielobjekts (Z) aus den Ortsdaten des Referenzmodells im Schritt c) von der an der Beobachtungsposition befindlichen Bilderfassungseinrichtung ein virtueller Sichtstrahl definiert wird, der beispielsweise der optischen Achse der Bilderfassungseinrichtung entspricht, und dass die Koordinaten des von diesem Sichtstrahl auf dem Zielobjekt (Z) abgebildeten Zielpunkts im Referenzmodell als Positionsdaten des Zielobjekts (Z) bestimmt werden.

7. Verfahren nach einem der vorhergehenden Ansprüche, wobei zur weiteren Führung des Flugkörpers zu dem Zielobjekt (Z) folgende Schritte durchgeführt werden:
aa) Erfassen eines Bildes des Zielobjekts (Z) und von dessen Umgebung mit einer an Bord des Flugkörpers vorgesehenen Bilderfassungseinrichtung (20);
bb) Abgleichen des in Schritt aa) gewonnenen Bildes mit dem dreidimensionalen Referenzmodell;
cc) Bestimmen der Positionsdaten der Bilderfassungseinrichtung (20) und damit des Flugkörpers relativ zu den Positionsdaten des Zielobjekts (Z) und
dd) Steuern des Flugkörpers in das Zielobjekt (Z) unter Verwendung der in Schritt cc) ermittelten Relativlage des Flugkörpers zum Zielobjekt (Z),
wobei das Abgleichen des Bildes des Zielobjekts (Z) und von dessen Umgebung mit dem Referenzmodell in Schritt bb) in den folgenden Teilschritten erfolgt:
bb1) Bilden eines dreidimensionalen Linienmodells aus dem dreidimensionalen Referenzmodell;
bb2) Projizieren des Linienmodells aufgrund einer groben Positions- und Lagehypothese in das von der Bilderfassungseinrichtung (20) aufgenommene Bild des Zielobjekts (Z) und von dessen Umgebung;
bb3) Abgleichen der Linien des dreidimensionalen Linienmodells mit aus dem Bild extrahierten Liniensegmenten; und
bb4) Berechnen einer Korrektur der Positions- und Lagehypothese aus dem Abgleich
wobei die in Schritt bb4) ermittelte Korrektur bei der Bestimmung der Positionsdaten des Zielobjekts (Z) in Schritt cc) berücksichtigt wird.

## Claims

1. Method for determining the position data of a target object (Z) in a reference system from an observation position spaced apart therefrom, comprising the steps of:
a) providing a three-dimensional reference model of the environment of the target object (Z) using known geographical location data;
b) aligning an image of the target object (Z), which appears for an observer from the observation position, and the environment thereof, the image being supplied by an image capture means (10) of an illumination device (1), using the three-dimensional reference model;
c) determining the position data of the targeted target object (Z) in the three-dimensional reference model as relative position data for known location data of the three-dimensional reference model by way of a computing means of the illumination device (1); and
d) conveying the relative position data to a missile so as to brief it,
the alignment of the image of the target object (Z) and the environment thereof using the reference model in step b) taking place in the following sub-steps:
b1) forming a three-dimensional line model from a three-dimensional reference model;
b2) projecting the line model, on the basis of a rough position and attitude hypothesis, into the image, taken by the capture means, of the target object (Z) and the environment thereof;
b3) aligning the lines of the three-dimensional line model with line segments extracted from the picture; and
b4) calculating a correction to the position and attitude hypothesis from the alignment;
wherein the correction ascertained in step b4) is taken into account in determining the position data of the target object (Z) in step c).

2. Method according to claim 1,
**characterised**
**in that** the reference model provided in step a) is obtained from aerial images and/or satellite images of the target object (Z) and the environment thereof.

3. Method according to either claim 1 or claim 2,
**characterised**
**in that** the reference model provided in step a) is obtained from radar or lidar measurements of the target object (Z) and/or the environment thereof.

4. Method according to any of the preceding claims,
**characterised**
**in that**, to determine the position data of the target object (Z) from the location data of the reference model in step c), the following sub-steps are carried out:
c1) determining the geographical position data of the observation position;
c2) determining the position data of the target object (Z) relative to the position data of the observation position;
c3) ascertaining the relative position data of the target object (Z) with respect to the reference model.

5. Method according to claim 4,
**characterised**
**in that** the determination of the position data of the target object (Z) relative to the position data of the observation position in step c2) takes place in that, from the observation position, a distance measurement, preferably laser distance measurement, directed at the target object (Z) is carried out, the direction and distance ascertained during the distance measurement being drawn on to determine the position data of the target object (Z).

6. Method according to any of claims 1 to 3,
**characterised**
**in that**, to determine the position data of the target object (Z) from the location data of the reference model in step c), a virtual line of sight, which corresponds for example to the optical axis of the image capture means, is defined by the image capture device located at the observation position, and in that the coordinates of the target point mapped on the target object (Z) by this line of sight are determined in the reference model as position data of the target object (Z).

7. Method according to any of the preceding claims, wherein for further guidance of the missile with respect to the target object (Z) the following steps are carried out:
aa) capturing an image of the target object (Z) and the environment using an image capture means (20) provided on board the missile;
bb) aligning the image obtained in step aa) with the three-dimensional reference model;
cc) determining the position data of the image capture means (20) and thus of the missile relative to the position data of the target object (Z); and
dd) piloting the missile into the target object (Z) using the relative attitude of the missile with respect to the target object (Z) as ascertained in step cc),
the alignment of the image of the target object (Z) and the environment thereof using the reference model in step bb) taking place in the following sub-steps:
bb1) forming a three-dimensional line model from a three-dimensional reference model;
bb2) projecting the line model, on the basis of a rough position and attitude hypothesis, into the image, taken by the capture means (20), of the target object (Z) and the environment thereof;
bb3) aligning the lines of the three-dimensional line model with line segments extracted from the picture; and
bb4) calculating a correction to the position and attitude hypothesis from the alignment,
wherein the correction ascertained in step b4) is taken into account in determining the position data of the target object (Z) in step c).

## Revendications

1. Procédé de détermination de données de position d'un objet cible (Z) dans un système de référence depuis une position d'observation à distance de celui-ci, comprenant les étapes :
a) mise à disposition d'un modèle de référence tridimensionnel de l'environnement de l'objet cible (Z) avec des données de lieu géographiques connues ;
b) comparaison d'une image de l'objet cible (Z) et de son environnement découlant de la position d'observation pour un observateur, l'image étant fournie par un moyen de saisie d'images (10) d'un appareil de reconnaissance (1), avec le modèle de référence tridimensionnel ;
c) détermination des données de position de l'objet cible (Z) visé dans le modèle de référence tridimensionnel comme données de position relatives par rapport à des données de lieu connues du modèle de référence tridimensionnel au moyen d'un moyen informatique de l'appareil de reconnaissance (1) ; et
d) transmission des données de position relatives à un engin volant à des fins de pilotage de celui-ci,
la comparaison de l'image de l'objet cible (Z) et de son environnement avec le modèle de référence de l'étape b) étant effectuée par les étapes partielles suivantes :
b1) formation d'un modèle en fil de fer tridimensionnel à partir du modèle de référence tridimensionnel ;
b2) projection du modèle en fil de fer, sur la base d'une position et situation hypothétique approximative, dans l'image de l'objet cible (Z) et de son environnement enregistrée par un moyen de saisie d'images ;
b3) comparaison des lignes du modèles en fil de fer tridimensionnel avec des segments de ligne extraits de l'image ; et
b4) calcul d'une correction de la position et situation hypothétique à partir de la comparaison
la correction déterminée à l'étape b4) étant prise en compte lors de la détermination des données de position de l'objet cible (Z) de l'étape c).

2. Procédé selon la revendication 1, **caractérisé en ce que** le modèle de référence mis à disposition à l'étape a) est obtenu à partir de prises de vue aériennes et/ou de prises de vue satellitaires de l'objet cible (Z) et de son environnement.

3. Procédé selon la revendication 1 ou 2, **caractérisé en ce que** le modèle de référence mis à disposition à l'étape a) est obtenu à partir de mesures radar ou lidar de l'objet cible (Z) et/ou de son environnement.

4. Procédé selon l'une des revendications précédentes,
**caractérisé en ce**
**que**, pour déterminer les données de position de l'objet cible (Z) à partir de données de lieu du modèle de référence à l'étape c), les étapes partielles suivantes sont exécutées :
c1) détermination des données de position géographiques de la position d'observation ;
c2) détermination des données de position de l'objet cible (Z) par rapport aux données de position de la position d'observation ;
c3) détermination des données de position relatives de l'objet cible (Z) par rapport au modèle de référence.

5. Procédé selon la revendication 4, **caractérisé en ce que** la détermination des données de position de l'objet cible (Z) par rapport aux données de position de la position d'observation de l'étape c2) est effectuée par l'exécution, à partir de la position d'observation, d'une mesure de distance, de préférence une mesure de distance par laser, dirigée vers l'objet cible (Z), la direction et la distance déterminées lors de la mesure de distance étant mises à contribution pour la détermination des données de position de l'objet cible (Z).

6. Procédé selon l'une des revendications 1 à 3, **caractérisé en ce**
**que** pour la détermination des données de position de l'objet cible (Z) à partir des données de lieu du modèle de référence de l'étape c) par le moyen de saisie d'images se trouvant dans la position d'observation, un rayon visuel virtuel est défini, qui correspond par exemple à l'axe optique du moyen de saisie d'images, et **en ce que** les coordonnées du point de mire représenté sur l'objet cible (Z) par ce rayon visuel sont déterminées comme données de position de l'objet cible (Z) dans le modèle de référence.

7. Procédé selon l'une des revendications précédentes, dans lequel, pour le guidage ultérieur de l'engin volant jusqu'à l'objet cible (Z), les étapes suivantes sont exécutées :
aa) saisie d'une image de l'objet cible (Z) et de son environnement au moyen d'un moyen de saisie d'images (20) prévu à bord de l'engin volant ;
bb) comparaison de l'image obtenue à l'étape aa) avec le modèle de référence tridimensionnel ;
cc) détermination des données de position du moyen de saisie d'images (20) et ainsi de l'engin volant par rapport aux données de position de l'objet cible (Z) et
dd) pilotage de l'engin volant dans l'objet cible (Z) en utilisant la situation relative de l'engin volant par rapport à l'objet cible (Z) déterminée à l'étape cc),
la comparaison de l'image de l'objet cible (Z) et de son environnement avec le modèle de référence de l'étape bb) étant effectuée par les étapes partielles suivantes :
bb1) formation d'un modèle en fil de fer tridimensionnel à partir du modèle de référence tridimensionnel ;
bb2) projection du modèle en fil de fer, sur la base d'une position et situation hypothétique approximative, dans l'image de l'objet cible (Z) et de son environnement enregistrée par le moyen de saisie d'images (20) ;
bb3) comparaison des lignes du modèle en fil de fer tridimensionnel avec des segments de ligne extraits de l'image ; et
bb4) calcul d'une correction de la position et situation hypothétique à partir de la comparaison
la correction déterminée à l'étape bb4) étant prise en compte lors de la détermination des données de position de l'objet cible (Z) à l'étape cc).
